Europäisches Patentamt

European Patent Office

Office européen des brevets

(11) Veröffentlichungsnummer: **0 226 088**
**B1**

(12) **EUROPÄISCHE PATENTSCHRIFT**

(19)

(45) Veröffentlichungstag der Patentschrift:
21.03.90

(21) Anmeldenummer: 86116440.8

(22) Anmeldetag: 26.11.86

(51) Int. Cl.⁴: **F01N 7/08,** F02M 35/10,
F16L 33/26

(54) **Rohrverbindung, insbesondere für Verbrennungsmotore.**

(30) Priorität: 03.12.85 DE 3542684

(43) Veröffentlichungstag der Anmeldung:
24.06.87 Patentblatt 87/26

(45) Bekanntmachung des Hinweises auf die Patenterteilung:
21.03.90 Patentblatt 90/12

(84) Benannte Vertragsstaaten:
AT BE CH DE FR GB IT LI NL SE

(56) Entgegenhaltungen:
DE-A- 2 035 757
DE-A- 2 912 347
FR-A- 2 423 709
GB-A- 1 432 526
US-A- 4 202 568
US-A- 4 265 471

(73) Patentinhaber: Witzenmann GmbH
Metallschlauch-Fabrik Pforzheim, Östliche
Karl-Friedrich-Strasse 134, D-7530 Pforzheim(DE)

(72) Erfinder: Eckert, Lutz, Zwerchweg 79,
D-7540 Neuenbürg 4(DE)

(74) Vertreter: Brommer, Hans Joachim, Dr.-Ing. et al,
Patentanwälte Dipl.-Ing. R. Lemcke Dr.-Ing. H.J.
Brommer Bismarckstrasse 16 Postfach 4026,
D-7500 Karlsruhe 1(DE)

ACTORUM AG

**Beschreibung**

Die Erfindung geht aus von einer festen Verbindung eines Rohres, insbesondere eines Ansaug- oder Abgasrohres eines Verbrennungsmotores mit einem gewelltem, flexiblen Leitungsteil, insbesondere einem Balg, wobei am Rohrende ein Wulst angeordnet ist, gegen den ein am Ende des flexiblen Leitungsteiles angeordneter, abgewickelter Bund gedrückt ist und mit diesem zusammen durch eine in Umfangsrichtung spannbare Schelle aus einem V-ähnlich profilierten Band mit dem inneren Rohrende verspannbar ist.

Eine derartige Rohrverbindung ist durch die DE-OS 2 035 757 bekannt. Sie hat gegenüber einer Flanschbefestigung im wesentlichen den Vorteil einer geringeren Masse. Dafür muß aber der Auspuffkrümmer an seinem Anschlußende einen umlaufenden Befestigungswulst aufweisen, so daß diese Art der Befestigung praktisch nur für Gußteile in Betracht kommt. Darüberhinaus muß dieser Befestigungswulst an seinen Außenseiten auf Maß gedreht werden, damit er mit der Innenkontur der V-Schelle unter Berücksichtigung des einzuspannenden Balg-Endes korrespondiert.

Daneben ist es durch die FR-A 2 423 709 bekannt, zwei teleskopartig zusammengeschobene Rohre, von denen das äußere Rohr einen abgewinkelten Bund aufweist, der an einem Dichtring anliegt, durch eine den Dichtring und der abgewinkelten Bund übergreifende V-Schelle miteinander zu verspannen. Dabei handelt es sich aber um einen Schiebesitz, der Bewegungen der angeschlossenen Rohre relativ zueinander gestatten soll. Darüberhinaus kann eine derartige Gleitverbindung nicht dicht ausgeführt werden. Deshalb ist das Ende des inneren Rohres venturiartig nach innen gezogen. Dadurch wird im Dichtungsbereich ein Unterdruck erzeugt, so daß kein Abgas von innen nach außen strömen kann, sondern statt dessen Umgebungsluft durch den kritischen Dichtungsbereich nach innen gesaugt wird.

Schließlich ist durch die DE-OS 2 912 347 eine Anordnung zur elastischen Verbindung von Auspuffleitungen bekannt in Form eines Gelenkes. Dabei ist das eine Leitungsende als Kugelpfanne ausgebildet, in der das andere Leitungsende unter Zwischenlage eines Dichtungsringes gelenkig gelagert ist. Der Dichtring besteht aus einem Füllstoff aus Mineralfaser, der von einem Metallgeflecht, -gewebe oder -gestricke aus korrosionsbeständigem Metalldraht mit Gleitlagereigenschaften umhüllt ist. Die beiden Rohrenden mitsamt dem Dichtring werden durch axial wirksame Federelemente zusammengehalten.

Der vorliegenden Erfindung liegt die Aufgabe zugrunde, die eingangs beschriebene Rohrverbindung dahingehend zu verbessern, daß die bisherigen Dreharbeiten am Wulstring entfallen, daß man mit geringen Massen auskommt, so daß die Verbindung insbesondere für die starken Erschütterungen einer Kraftfahrzeug-Auspuff-Anlage geeignet ist und daß sie sich durch problemlose Montage und Demontage auszeichnet.

Diese Aufgabe wird erfindungsgemäß dadurch gelöst, daß der Wulst durch einen Dichtring gebildet ist, der zur Gewährleistung seiner Elastizität zumindest überwiegend aus einem Metallgestricke besteht und das der Dichtring durch die Verspannung des V-ähnlich profilierten Bandes an dem zylindrisch auslaufenden Rohrende in seiner Axialposition festgelegt ist.

Die Erfindung beruht also darauf, anstelle des bisher notwendigen, angegossenen Befestigungswulstes einen separaten Dichtring zu verwenden. Dieser Dichtring besteht aus schwach vorgepreßtem Material wie Metalldrähten, -fäden oder -spänen und kann erforderlichenfalls auch mit nichtmetallischen Dichtstoffen, insbesondere Glimmer gefüllt sein, damit er bei der geforderten Temperaturbeständigkeit einerseits elastisch, andererseits dicht ist.

Der Vorteil dieser Konstruktion besteht darin, daß das anzuschließende Rohrende keine besondere Profilierung aufzuweisen braucht. Auch erübrigt sich die Bearbeitung etwaiger Dichtflächen am Rohrende.

Darüber hinaus ist die erfindungsgemäße Verbindung sehr montagefreudig. Denn das anzuschließende Rohr braucht nicht auf ein exaktes Maß abgelängt zu werden. Vielmehr kann der Dichtring mit dem anzuschließenden Leitungsteil von Hand auf dem Rohr in die gewünschte Axialposition verschoben werden. Sodann erfolgt in einem Spannvorgang die Festlegung der Anschlußteile unter gleichzeitiger Anpressung des Dichtringes. Schließlich gestattet es die Erfindung, mit weiten Durchmessertoleranzen zu arbeiten, da sich der Dichtring auf dem Rohr selbst justiert.

Zweckmäßig ist der Dichtring in seinem Profil an das der Bandschelle angepaßt, weist also etwa einen trapezförmigen Querschnitt auf. Daneben sind aber auch andere Querschnittsformen möglich, auf die später noch zurückgekommen wird.

Bei hohen Anforderungen an die Verspannbarkeit in Radialrichtung empfiehlt es sich, daß der Dichtring geteilt ist bzw. an seiner Innenzylinderfläche eine in Umfangsrichtung laufende breite Nut aufweist. Dadurch wird er bzw. werden seine Flankenwände nachgiebig, da sie axial nach innen ausweichen können. Zugleich ergibt sich während dieser Ausweichbewegung der Flanken eine Querschnittserweiterung radial nach innen, so daß eine besonders starke Anpressung des Dichtringes am Rohrende gewährleistet ist.

Eine weitere zweckmäßige Ausführungsform für den Dichtring besteht darin, daß er um einen V-ähnlich profilierten Profilring herumgebaut ist, dessen beide Flanken sich nach innen erstrecken und nahe der inneren Zylinderfläche des Dichtringes enden. Diese Flanken werden beim Spannen der Schelle nach innen gepreßt, wobei sich gleichzeitig, wie zuvor beschrieben, eine radiale Bewegungskomponente auf das Rohrende zu ergibt und sich der Profilring quasi auf dem Rohrende verkrallt.

Des weiteren besteht die Möglichkeit, daß der Dichtring eine ihn etwa radial durchquerende, flexible Trennfolie aufweist oder von einer solchen umgeben ist. Dadurch kann ein relativ poröses, undichtes Material für den Dichtring verwendet werden, da die Abdichtung durch die Trennfolie gewährleistet ist. Daneben bietet die Umhüllung des Dichtringes die Möglichkeit, anstelle oder zusätzlich zu dem faserartigen Füllmaterial auch pulverförmige Stoffe, insbesondere Keramik-Granulat, Metallpulver u. dgl. zu verwenden.

Der abgewinkelte Bund des gewellten Leitungsteiles kann sich über die ihm zugewandte Flanke des Dichtringes wie auch über die anschließenden Außenflächen erstrecken. Im erstgenannten Fall empfiehlt es sich zur Zentrierung des Bundes, daß der Dichtungsring an der ihm zugewandten Flanke einen axial vorstehenden Anschlag, insbesondere in Form einer in Umfangsrichtung laufenden Kante aufweist. Dadurch wird die richtige Montage des Balges erleichtert.

Alternativ zu der vorbeschriebenen, an den Querschnitt der Spannschelle angepaßten Profilform des Dichtungsringes besteht auch die Möglichkeit, zwischen der Spannschelle und dem Dichtungsring zumindest einen ggf. radialelastischen Spannring anzuordnen, der seinerseits über eine geneigte Keilfläche an einer entsprechenden Keilfläche des Dichtungsringes anliegt. Auf diese Weise kann die Spannkraft der Schelle in verstärktem Maße in die radiale Richtung umgelenkt werden.

Weitere Einzelheiten und Merkmale der Erfindung ergeben sich aus der nachfolgenden Beschreibung von Ausführungsbeispielen anhand der Zeichnung; dabei zeigt:

Fig. 1 einen Axialschnitt der Verbindung mit einfach abgewinkeltem Bund am Ende des flexiblen Leitungsteiles;

Fig. 2 eine Verbindung entsprechend Fig. 1, jedoch mit zweifach abgewinkeltem Bund;

Fig. 3 eine Verbindung bei einem Dichtungsring mit flacherem Flankenwinkel;

Fig. 4 einen profilierten Dichtungsring;

Fig. 5 einen Dichtungsring mit Luftkammern;

Fig. 6 einen Dichtungsring mit eingebautem Profilring;

Fig. 7 einen mit einem Spannring zusammenwirkenden Dichtungsring und

Fig. 8 einen mit zwei Spannringen zusammenwirkenden Dichtungsring.

In den Ausführungsbeispielen handelt es sich bei dem Abgasrohr jeweils um einen Gußkrümmer 1, dessen von Zylinderkopf weglaufendes Ende mit einem Metallbalg 2 verbunden werden soll. Diese Verbindung erfolgt durch einen Dichtring 3, bei dem es sich um ein gepreßtes Formteil handelt, der zumindest überiwegend aus elastischem Drahtvlies, Gewebe, Geflecht oder Gestricke aus korrosionsbeständigem Metall besteht. Ebenso kann er aus einem gepreßten Granulat- oder Spänepaket hergestellt sein. Entscheidend ist lediglich, daß er neben der ohnehin vorhandenen Temperaturbeständigkeit und Dichtheit noch hinreichend elastisch ist, damit er die Oberflächen-Ungleichheiten des unbearbeiteten Krümmer-Endes 1 auszugleichen und abzudichten vermag.

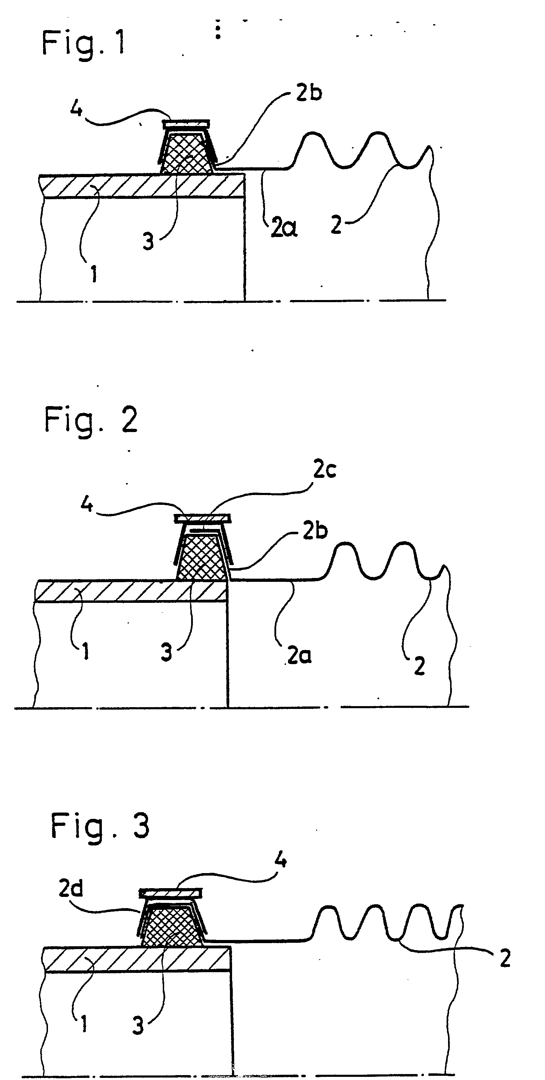

Der Querschnitt des Dichtringes 3 ist im wesentlichen trapezförmig, derart, daß die breitere Zylinderfläche innen, die schmalere Zylinderfläche außen verläuft. Das Ende des anzuschließenden Balges 2 weist – ggf. unter Zwischenschaltung eines zylindrischen Halsstückes 2a – einen nach außen abgewinkelten Bund 2b auf, der entlang der benachbarten Flanke des Dichtringes 3 verläuft (Fig. 1), der aber auch durch zusätzliche Abwinkelungen 2c und 2d weiter um die Außenkontur des Dichtringes herumgeführt werden kann, so daß er auch an der Zylinderaußenfläche (Fig. 2) oder zusätzlich noch an der anschließenden Flanke des Dichtringes (Fig. 3) anliegt.

Die Anpressung des abgewinkelten Bundes 2b und der ggf. sich anschließenden Abwinkelungen an den Dichtring 3 sowie dessen Anpressung an das Ende des Rohrkrümmers 1 erfolgt durch eine Schelle 4 in ein und demselben Spannvorgang. Diese Schelle 4 besteht aus einem V-ähnlich profilierten Band, das den Dichtring 3 und den angelegten abgewinkelten Bund des Balges 2 umgibt und das in Umfangsrichtung in an sich bekannter Weise spannbar ist. Zur Erzielung hoher Spannkräfte empfiehlt es sich, daß die Schelle außen durch ein zusätzliches Flachband verstärkt ist.

Der Querschnitt der Schelle 4 ist im allgemeinen so bemessen, daß sie auch in verspanntem Zustand in Radialrichtung noch etwas Luft gegenüber der zylindrischen Außenfläche des Dichtringes 3 hat, während die Flanken der Schelle mit den gegenüberliegenden Flanken des Dichtringes 3 verspannt sind. Die Schelle 4 kann aber auch so ausgeführt sein, da sie nicht nur mit ihren Flanken, sondern auch mit ihrem zylindrischen Teilstück gleichermaßen mit den gegenüberliegenden Außenseiten des Dichtringes verspannt wird.

In den Fig. 1 und 2 entspricht die Flankenneigung des Dichtringes 3 der Flankenneigung der Schelle 4. In Fig. 3 hingegen verlaufen die Flanken des Dichtringes etwas flacher mit der Folge, daß es beim Anspannen der Schelle 4 vor allem zu einem Zussamenpressen des Dichtringes nahe seinem inneren Umfang kommt. Das heißt, daß die Verformung des Dichtringes auf den Bereich konzentriert wird, wo er am Krümmer 1 aufsitzt und fest verspannt sowie abgedichtet werden soll.

Während der Dichtring 3 in der Fig. 1 axial und radial zusammengedrückt wird, handelt es sich bei Fig. 2 und 3 überwiegend um axiale Zusammenpressung. Fig. 3 bietet noch den Montagevorteil, daß der Dichtring schon bei Herstellung eingelegt und damit unverlierbar gehalten wird.

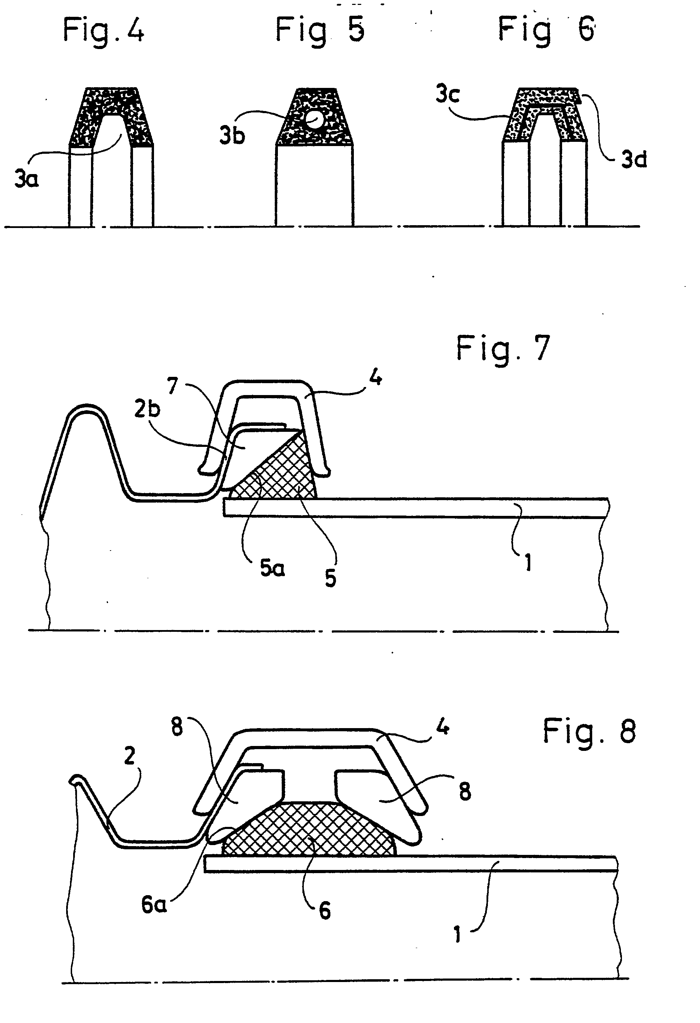

Die Fig. 4 bis 6 zeigen verschiedene Ausführungsmöglichkeiten des Dichtringes 3. In Fig. 4 weist der Dichtring an seiner Innenzylinderfläche eine in Umfangsrichtung laufende Nut 3a auf, wodurch seine Flankenwände nachgiebiger werden. Es kommt dadurch, insbesondere wenn ihr Neigungswinkel entsprechend Fig. 3 weniger steil als an den korrespondierenden Flanken der Schelle 4 4 ist, zu einem axialen und radialen Nach-innen-Schwenken am Innenumfang des Dichtringes, also zu einer besonders starken Anpressung und Abdichtung an das Ende des Krümmers 1. Bei der Ausführungsform nach Fig. 5 ist der Dichtring in seinem Kern mit Luftkammern 3b versehen, die jedoch auch mit elastischem Füllmaterial gefüllt sein können.

Sie haben die Aufgabe, die Elastizität des Dichtringes und seine Verspannbarkeit zu verbessern.

Bei dem Ausführungsbeispiel nach Figur 6 befindet sich in dem Dichtring ein Profilring 3c, der etwa V-förmig profiliert ist. Er entspricht dem Profil des Dichtringes, kann jedoch auch in einem Dichtring ohne Innennut verwendet werden. Seine beiden nach innen laufenden Flanken enden nahe der inneren Zylinderfläche des Dichtringes, können auch geringfügig vorstehen und haben die Aufgabe, sich beim Anziehen der Schelle 4 auf dem Ende des Gußkrümmers 1 zu verkrallen.

Außerdem können die Dichtringe, was in der Zeichnung nicht dargestellt ist, eine elastische Ummantelung aufweisen. Dies kommt insbesondere dann in Betracht, wenn neben dem vorerwähnten faserartigen Material noch pulverförmige Stoffe eingesetzt werden, die ansonsten aus den Poren des Dichtringes herausfallen könnten. Auch können in den Dichtring einzelne von der inneren zur äußeren Zylinderfläche laufende flexible Folien eingepreßt sein, wenn besonders hohe Anforderungen an die Dichtheit gestellt werden.

Schließlich kann der Dichtring an seiner dem Balg zugewandten Flane nahe dem Außenumfang eine in Umfangsrichtung umlaufende, axial vorstehende Kante 3d aufweisen. Diese Kante dient zur Zentrierung des Balg-Endes, wenn dieses nur mit einer Abwinkelung 2b versehen ist, also nicht um den Dichtring herumgreift.

Erstreckt sich der abgewinkelte Bund 2b, 2c nicht über die gesamte Außenfläche des Dichtringes 3, wie in Fig. 1 und 2 dargestellt, kann aus Gründen einer symmetrischen Anpressung an die freie Flanke des Dichtringes 3 eine separate Scheibe angelegt werden, die in ihren Maßen etwa dem abgewinkelten Abschnitt 2b entspricht.

Die Fig. 7 und 8 zeigen Bauformen, bei denen anders geformte Dichtringe 5 und 6 verwendet werden, die unter Zwischenlage von ggf. radial-elastischen Spannringen 7 bzw. 8 mit der Spannschelle 4 zusammenwirken. Dabei sind eine oder beide Flanken der Dichtringe durch Keilflächen 5a bzw. 6a gebildet, die mit entsprechenden Keilflächen der Spannringe korrespondieren. Der abgewinkelte Bund 2b des anzuschließenden Balges verläuft dabei zweckmäßig zwischen den Spannringen und der Spannschelle 4, kann aber auch zwischen den beiden genannten Keilflächen angeordnet werden. Der Sinn dieser Konstruktion besteht darin, durch zweifache Umsetzung der Spannkräfte, nämlich einmal von der Spannschelle 4 auf die Spannringe 7 oder 8, zum anderen von den Spannringen 7 oder 8 auf den Dichtring 5 bzw. 6 die zunächst radiale Spannkraft der Spannschelle 4 in besonders hohem Maße in Radialrichtung zu übersetzen.

Der Dichtring kann auch andere Profilformen aufweisen, insbesondere ein Rund-, Halbrund- oder Dreieckprofil, wobei das Profil der Bandschelle jeweils entsprechend angepaßt ist.

**Patentansprüche**

1. Feste Verbindung eines Rohres, insbesondere eines Ansaug- oder Abgasrohres (1) eines Verbrennungsmotores mit einem gewelltem, flexiblen Leitungsteil, insbesondere einem Balg (2), wobei am Rohrende ein Wulst angeordnet ist, gegen den ein am Ende des flexiblen Leitungsteiles angeordneter, abgewickelter Bund (2b) gedrückt ist und mit diesem zusammen durch eine in Umfangsrichtung spannbare Schelle (4) aus einem V-ähnlich profiliertem Band mit dem inneren Rohrende verspannbar ist, dadurch gekennzeichnet, daß der Wulst durch einen Dichtring (3, 5, 6) gebildet ist, der zur Gewährleistung seiner Elastizität zumindest überwiegend aus einem Metallgestricke besteht und daß der Dichtring durch die Verspannung des V-ähnlich profilierten Bandes (4) an dem zylindrisch auslaufenden Rohrende (1) in seiner Axialposition festgelegt ist.

2. Vorrichtung nach Anspruch 1, dadurch gekennzeichnet, daß der Dichtring (3) einen an das Profil der Profilschelle (4) angepaßten, etwa trapezförmigen Querschnitt aufweist.

3. Vorrichtung nach Anspruch 1 oder 2, dadurch gekennzeichnet, daß der Dichtring (3) weniger steile Flanken als die Profilschelle (4) aufweist.

4. Vorrichtung nach einem der vorhergehenden Ansprüche, dadurch gekennzeichnet, daß der Dichtring (3) an seiner Innenzylinderfläche eine in Umfangsrichtung laufende Nut (3a) aufweist.

5. Vorrichtung nach einem der vorhergehenden Ansprüche, dadurch gekennzeichnet, daß der Dichtring (3) einen V-ähnlich profilierten Profilring (3c) enthält, dessen beide Flanken sich nach innen erstrecken.

6. Vorrichtung nach Anspruch 5, dadurch gekennzeichnet, daß die beiden Flanken des Profilringes (3c) an der inneren Zylinderfläche des Dichtringes (3) enden.

7. Vorrichtung nach einem der vorhergehenden Ansprüche, dadurch gekennzeichnet, daß der Dichtring (3) eine ihn etwa radial durchquerende Trennfolie aufweist oder von einer solchen umgeben ist.

8. Vorrichtung nach einem der vorhergehenden Ansprüche, dadurch gekennzeichnet, daß sich der abgewinkelte Bund (2b) des gewellten, flexiblen Leitungsteiles (2) nur längs der ihm zugeordneten Flanke des Dichtringes (3) erstreckt.

9. Vorrichtung nach Anspruch 8, dadurch gekennzeichnet, daß der Dichtring (3) an seiner dem gewellten, flexiblen Leitungsteil (2) zugewandten Flanke einen vorstehenden Anschlag, insbesondere in Form einer in Umfangsrichtung laufenden Kante (3d) zur Zentrierung des abgewinkelten Bundes (2b) aufweist.

10. Vorrichtung nach einem der vorhergehenden Ansprüche, dadurch gekennzeichnet, daß der abgewinkelte Bund (2b) des gewellten, flexiblen Leitungzteiles (2) über eine zylindrische Verlängerung (2a) an dieses angeschlossen ist.

11. Vorrichtung nach Anspruch 1, dadurch gekennzeichnet, daß zwischen der Spannschelle (4) und dem Dichtring (5, 6) zumindest ein Spannring (7, 8) angeordnet ist, der über eine geneigte Keilfläche an einer entsprechenden Keilfläche (5a, 6a) des Dichtringes anliegt, wobei der abgewinkelte Bund (2b, 2c) zwischen der Spannschelle (4) und dem Spannring (7, 8) verläuft.

**Claims**

1. Firm connection of a pipe, especially a suction or exhaust pipe (1) of an internal combustion engine with a corrugated flexible conduit part, especially a bellows (2), where a bead is arranged on the pipe end, against which an angled-off collar (2b) arranged on the end of the flexible conduit part is pressed and can be braced together therewith with the inner pipe end by a clip (4) of a strip of V-like profile, which can be tightened in the circumferential direction, characterised in that the bead is formed by a sealing ring (3, 5, 6) which, to guarantee its elasticity, consists at least predominantly of a metal network and in that the sealing ring is fixed in its axial position by the tightening of the strip (4) of V-like profile on the cylindrically terminating pipe end (1).

2. Device according to claim 1, characterised in that the sealing ring (3) possesses a somewhat trapeziumshaped cross-section adapted to the profile of the profiled clip (4).

3. Device according to claim 1 or 2, characterised in that the sealing ring has less steep flanks than the profiled clip (4).

4. Device according to one of the preceding claims, characterised in that the sealing ring (3) has on its inner cylindrical face a groove (3a) running in the circumferential direction.

5. Device according to one of the preceding claims, characterised in that the sealing ring (3) contains a profiled ring (3c) of V-like profile, the two flanks of which extend inwards.

6. Device according to claim 5, characterised in that the two flanks of the profiled ring (3c) end at the inner cylindrical surface of the sealing ring (3).

7. Device according to one of the preceding claims, characterised in that the sealing ring (3) comprises a separator foil traversing it radially, or is surrounded by one such.

8. Device according to one of the preceding claims, characterised in that the angled-off collar (2b) of the corrugated, flexible conduit part (2) extends only along the flank allocated to it of the sealing ring (3).

9. Device according to claim 8, characterised in that the sealing ring (3) comprises on its flank facing the corrugated, flexible conduit part (2) a projecting stop, especially in the form of an edge (3d) running in the circumferential direction, for the centring of the angled-off collar (2b).

10. Device according to one of the preceding claims, characterised in that the angled-off collar (2b), of the corrugated flexible conduit part (2) is attached to the conduit part (2) through a cylindrical prolongation (2a).

11. Device according to claim 1, characterised in that between the clip (4) and the sealing ring (5, 6) there is arranged at least one clamping ring (7, 8) which rests through an inclined wedge face on a corresponding wedge face (5a, 6a) of the sealing ring, while the angled-off collar (2b, 2c) extends between the clip (4) and the clamping ring (7, 8).

**Revendications**

1. Raccordement fixe d'un tube, en particulier d'une tubulure d'aspiration ou d'échappement (1) d'un moteur à combustion interne, avec une partie de conduite ondulée, flexible, en particulier un soufflet (2), comprenant à l'extrémité du tube un bourrelet contre lequel est pressé un collet (2b) replié , prévu à l'extrémité de la partie de conduite flexible et avec lequel le bourrelet peut être serré ensemble avec l'extrémité du tube, située à l'intérieur, au moyen d'un collier (4) pouvant être serré dans le sens circonférentiel et fait d'une bande profilée à peu près en V, caractérisé en ce que le bourrelet est formé par une bague d'étanchéité (3, 5, 6) constituée au moins principalement d'un tricot métallique pour garantir son élasticité, et que le serrage de la bande (4), profilée à peu près en V, fixe la bague d'étanchéité dans sa position axiale sur l'extrémité de tube (1), se terminant par un bout cylindrique.

2. Dispositif selon la revendication 1, caractérisé en ce que la bague d'étanchéité (3) possède une section droite à peu près trapézoïdale adaptée au profil du collier profilé (4).

3. Dispositif selon la revendication 1 ou 2, caractérisé en ce que la bague d'étanchéité (3) présente des flancs moins raides, que le collier profilé (4).

4. Dispositif selon une des revendications précédentes, caractérisé en ce que la bague d'étanchéité (3) présente une gorge circonférentielle (3a) dans sa surface cylindrique intérieure.

5. Dispositif selon une des révendications précédentes, caractérisé en ce que la bague d'étanchéité (3) contient une bague profilée (3c), ayant un profil à peu près en V, dont les deux flancs sont dirigés vers l'intérieur.

6. Dispositif selon la revendication 5, caractérisé en ce que les deux flancs de la bague profilée (3c) se terminent à la surface cylindrique intérieure de la bague d'étanchéité (3).

7. Dispositif selon une des revendications précédentes, caractérisé en ce que la bague d'étanchéité (3) présente une feuille de séparation qui la traverse à peu près radialement ou est entourée par une telle feuille.

8. Dispositif selon une des revendications précédentes, caractérisé en ce que le collet replié (2b) de la partie de conduite ondulée (2), flexible, s'étend seulement le long du flanc de la bague d'étanchéité (3) qui lui est coordonné.

9. Dispositif selon la revendication 8, caractérisé en ce que la bague d'étanchéité (3) présente, à son flanc dirigé vers la partie de conduite ondulée (2), flexible, un élément d'arrêt saillant, notamment sous la forme d'un rebord circonférentiel (3d), pour le centrage du collet replié (2b).

10. Dispositif selon une des revendications précédentes, caractérisé en ce que le collet replié (2b) de la partie de conduite ondulée (2), flexible, est relié à cette partie de conduite avec interposition d'un prolongement cylindrique (2a).

11. Dispositif selon la revendication 1, caractérisé par la disposition, entre le collier de serrage (4) et la bague d'étanchéité (5, 6), d'au moins une bague de serrage (7, 8) qui est appliquée par une face inclinée à effet de coin contre une face à effet de coin (5a, 6a) correspondante de la bague d'étanchéité, le collet replié (2b, 2c) s'étendant entre le collier de serrage (4) et la bague de serrage (7, 8).

Fig. 1

Fig. 2

Fig. 3

Fig. 4

Fig 5

Fig 6

3a

3b

3c

3d

Fig. 7

7

2b

4

5a

5

1

Fig. 8

8

2

4

8

6a

6

1